# EUROPEAN PATENT APPLICATION

(11) **EP 4 286 325 A1**
(43) Date of publication of application: **06.12.2023**
(21) Application number: 21924031.4
(22) Date of filing: 13.05.2021
(51) Int. Cl.: C01B 25/37, C22B 23/00, C22B 3/06, C22B 3/44

(54) **METHOD FOR RESOURCE RECYCLING OF NICKEL-IRON ALLOY AND USE THEREOF**

(30) Priority: 04.02.2021 CN 202110154815
(71) Applicant: Hunan Brunp Recycling Technology Co., Ltd., Changsha, Hunan 410604 (CN); Guangdong Brunp Recycling Technology Co., Ltd, Foshan, Guangdong 528137 (CN); Hunan Brunp EV Recycling Co., Ltd., Changsha, Hunan 410604 (CN)
(72) Inventor: HE, Fang, Changsha, Hunan 410604 (CN); QIAO, Yanchao, Changsha, Hunan 410604 (CN); CHEN, Ruokui, Changsha, Hunan 410604 (CN); RUAN, Dingshan, Changsha, Hunan 410604 (CN); SHEN, Zhixin, Changsha, Hunan 410604 (CN); DENG, Haozhen, Changsha, Hunan 410604 (CN); LI, Changdong, Changsha, Hunan 410604 (CN)
(74) Representative: Torner, Juncosa I Associats, SL
(86) International application number: PCT/CN2021/093666
(87) International publication number: WO 2022/166023

(57) **Abstract**

A method for resource recycling of a nickel-iron alloy and use thereof. The method comprises the following steps: (1) ball-milling, pulverizing, and sieving a nickel-iron alloy to obtain a nickel-iron alloy powder; (2) leaching the nickel-iron alloy powder with an acid solution, heating and stirring, and filtering to obtain a leaching solution and a leaching residue; (3) adding a phosphorus source to the leaching solution, mixing and stirring, heating, and filtering to obtain iron phosphate and a post-precipitation solution; and (4) adding a neutralizing agent to the post-precipitation solution, heating and stirring, and filtering to obtain a nickel-containing solution. After the nickel-iron alloy is dissolved using the acid solution, iron phosphate is prepared under the effects of the phosphorus source or the phosphorus source plus an oxidant, and a precipitation aid. Further, a lithium iron phosphate positive electrode material can be prepared by using iron phosphate as a precursor of lithium iron phosphate. In addition, after impurities are removed from the post-precipitation solution, a nickel-containing solution having a relatively low impurity content can be obtained.

## Description

### TECHNICAL FIELD

The present invention belongs to the field of ferronickel alloy hydrometallurgy, and particularly relates to a method for recycling ferronickel alloy and an application thereof.

### BACKGROUND

Ferronickel alloy, as an alloy element additive, is mainly applied in the steelmaking and cast iron industries, and the main use thereof is as a raw material for smelting stainless steel. In recent years, the process of using laterite nickel ore to smelt ferronickel has developed rapidly. However, due to the lack of laterite nickel ore in China and the increasingly stringent domestic environmental protection requirements, a large number of companies have established smelting plants in Indonesia. It is expected that the production of ferronickel in Indonesia will accelerate in the next few years, and in the medium to long term, the growth rate of ferronickel production in China and Indonesia is much higher than the production rate and consumption growth rate of stainless steel, indicating that the domestic ferronickel alloy market will gradually reach saturation.

Meanwhile, new energy technologies are developing rapidly. Lithium iron phosphate is mainly used in the industry of new energy vehicles due to the advantages of a good safety, a long cycle period, a low cost, etc., and the demand for iron phosphate, which is used as a precursor for the preparation of lithium iron phosphate, is also increasing accordingly. At present, there are basically two methods for preparing iron phosphate: 1) a co-precipitation method, involving dissolving a phosphorus source and an iron source and then adding another compound for precipitation, whereby iron phosphate with a better particle size uniformity can be prepared; however, this method may have the problem of a higher impurity content; and 2) a hydrothermal method, involving uniformly mixing an iron source, a phosphorus source and a surfactant, and then carrying out a hydrothermal reaction at 180°C to obtain composite mesoporous iron phosphate. The process is simple and the product has a high crystallinity; however, the equipment requirements are high, and high temperature and high pressure conditions are needed

The related technology discloses a method for preparing a nickel sulfate solution and battery-grade iron phosphate from nickel-containing pig iron. The method involved therein involves leaching nickel-containing pig iron with a mixed acid of phosphoric acid/sulfuric acid or phosphoric acid/hydrochloric acid, then adding an alkaline solution and an oxidizing agent to precipitate iron phosphate, and subjecting the resulting nickel sulfate and sodium sulfate/ammonium sulfate mixed solution to extraction-reverse extraction to obtain a neat nickel sulfate solution. This process is feasible; however, the prepared iron phosphate does not reach the battery grade; in addition, the increase in the extraction process leads to increased costs, which is not conducive for promotion.

### SUMMARY

The present invention aims to solve at least one of the technical problems existing in the above existing technology. In view of this, the present invention proposes a method for recycling ferronickel alloy and an application thereof. The method can separate nickel and iron separately and realize effective utilization; in addition, the operation is simple, the metal recovery rate is high, and iron phosphate with greater economic benefits is prepared.

In order to achieve the above-mentioned object, the following technical solution is used for the present invention:
A method for recycling ferronickel alloy, including the following steps:
(1) ball-milling, crushing and sieving the ferronickel alloy to obtain a ferronickel alloy powder;
(2) leaching the ferronickel alloy powder with an acid solution, heating and stirring the solution, and filtering the solution to obtain a leaching effluent and a leaching residue;
(3) adding a phosphorus source to the leaching effluent, and mixing, stirring, heating and filtering the leaching effluent to obtain iron phosphate and a post-precipitation solution; and
(4) adding a neutralizing agent to the post-precipitation solution, and heating, stirring and filtering the solution to obtain a nickel-containing solution.

Preferably, step (3) further includes washing, filtering, and drying the iron phosphate to obtain an iron phosphate product.

More preferably, the washing is pulping washing, the washing has a liquid-to-solid ratio of (1-20): 1 mL/g, further preferably (1-10) : 1 mL/g, and the washing time is 0.5-5 h, further preferably 1-3 h.

Preferably, in step (1), the ferronickel alloy is obtained by subjecting laterite nickel ore to reduction roasting, and the ferronickel alloy has a nickel content of 15-40%, an iron content of 60-85% and a total impurity content of less than 2%.

More preferably, in step (1), the impurities of the ferronickel alloy include the following components in percentage by mass: 60-85% of Fe, 15-40% of Ni, 0.34-0.4% of Co, 0.09-0.1% of Mn, 0.27-0.3% of Si, 0.05-0.1% of Cr, 0.006-0.01% of Ca, 0.004-0.006% of Mg, 0.03-0.05% of Cu, 0.21-0.25% of S, and 0.03-0.08% of P.

Preferably, in step (1), the ferronickel alloy powder has a particle size of 10-900 µm.

Preferably, prior to leaching with the acid solution, step (2) further includes adding ferronickel alloy blocks, where the ferronickel alloy blocks have a particle size of 1-60 mm, the ferronickel alloy blocks are prepared by smelting laterite nickel ore, the morphology is mainly round-like particles with a relatively smooth surface.

Preferably, in step (2), the acid solution is at least one of sulfuric acid, hydrochloric acid or nitric acid.

Preferably, in step (2), the acid solution has a concentration of 0.1-10 mol/L, more preferably 0.5-5 mol/L.

Preferably, in step (2), the heating temperature is 30-100°C, more preferably 50-90°C, and the leaching time is 1-24 h, more preferably 3-15 h.

Preferably, in step (2), the leaching residue can be returned to the leaching section for continued reaction, and since the content of impurities in the ferronickel alloy is relatively small, the recovery rates of Ni and Fe from the raw material can be more than 99%.

Preferably, in step (3), the phosphorus source is at least one of phosphoric acid or a phosphate salt; and the phosphate salt includes, but is not limited to, at least one of trisodium phosphate, sodium dihydrogen phosphate, sodium monohydrogen phosphate, ammonium monohydrogen phosphate, ammonium dihydrogen phosphate or potassium phosphate.

Preferably, in step (3), the added amount of the phosphorus source is determined according to the content of iron ions in the acid leaching effluent, the Fe/P ratio is 0.5-1.5, more preferably 0.9-1.2, and the stirring time is 0.1-2 h.

Preferably, in step (3), an oxidizing agent is further added to the leaching effluent; and the oxidizing agent is at least one of air, oxygen, hydrogen peroxide, ozone, sodium chlorate, or sodium persulfate. Since the iron ions in the leaching effluent may be divalent iron, or a mixture of divalent iron and trivalent iron, it is necessary to use an oxidizing agent to oxidize it into trivalent iron.

More preferably, the amount of the oxidizing agent is 0.5-2 times the theoretical amount, further preferably 0.9-1.5 times. The theoretical amount is the theoretical amount for oxidizing the divalent iron into trivalent iron, and the added amount of the oxidizing agent in the present invention is 0.5-2 times the theoretical amount.

More preferably, the oxidizing agent is not necessarily added. When the acid solution used in step (2) is nitric acid, the iron ions in the leaching effluent have already been trivalent iron, and therefore, no oxidation is needed.

Preferably, in step (3), the heating temperature is 30-100°C, further preferably 50-90°C.

Preferably, in step (3), the stirring time is 1-24 h, further preferably 4-18 h.

Preferably, in step (3), it is necessary to add a precipitant before the heating; and the precipitant includes, but is not limited to, at least one of sodium hydroxide, sodium carbonate, titanium dioxide, aluminum hydroxide, aluminum oxide, anhydrous iron phosphate or iron phosphate dihydrate.

More preferably, the precipitant includes, but is not limited to, at least one of titanium dioxide, aluminum hydroxide, aluminum oxide, anhydrous iron phosphate or iron phosphate dihydrate.

More preferably, the added amount of the precipitant is 1-100 g/L, further preferably 10-50 g/L.

Preferably, in step (4), the neutralizing agent is at least one of sodium carbonate, calcium carbonate, ammonium carbonate, potassium hydroxide, or sodium hydroxide.

Preferably, in step (4), the neutralizing agent is formulated into a solution or slurry and added to the post-precipitation solution to make the pH value of the solution reach 3-6.

Preferably, in step (4), the heating temperature is 30-100°C, further preferably 50-80°C.

Preferably, in step (4), the stirring time is 1-10 h, further preferably 2-6 h.

The present invention further provides an application of the above-mentioned method in the preparation of a precursor.

Principle of the Invention:
Step 2: This step involves reacting nickel with iron under the action of an acid to obtain nickel ions and ferrous ions or nickel ions and iron ions:

   Ni+Fe+2H₂SO₄→NiSO₄+FeSO₄+2H₂↑;

   2Ni+Fe+8HCl→2NiCl₃+FeCl₂+4H₂↑;

   and

   3Ni+Fe+12HNO₃→3Ni(NO₃)₂+Fe(NO₃)₃+3NO↑+6H₂O.
Step 3: This step involves preparing an iron phosphate product:
   Sulfuric acid or hydrochloric acid system:

      2Fe²⁺+2H₃PO₄+H₂O₂→2FePO₄+2H₂O+4H⁺;
   Nitric acid system:

      Fe³⁺+H₃PO₄→FePO₄+3H⁺.
Step 3 further includes adding a neutralizing agent to the post-precipitation solution, and heating, stirring and filtering the solution to obtain a nickel-containing solution. This step is mainly for impurity removal. The nickel sulfate solution contains small amounts of Ca, Mg, and Fe. This step involves, without limitation, the following reactions:

   Ca²⁺+Na₂CO₃→CaCO₃↓+2Na⁺; Mg²⁺+2NaOH→Mg(OH)₂↓+2Na⁺;

   and

   2Fe³⁺+3Na₂CO₃+3H₂O→2Fe(OH)₃↓+6Na⁺+3CO₂.

Compared with the existing technology, the beneficial effects of the present invention are as follows:
1. In the present invention, after the ferronickel alloy is dissolved with an acid solution, iron phosphate is prepared by means of a phosphorus source or a phosphorus source and an oxidizing agent under the action of a precipitant, and the iron phosphate can be further used as a precursor of lithium iron phosphate for the preparation of a lithium iron phosphate positive electrode material. A neutralizing agent is added to the post-precipitation solution, and the solution is heated, stirred and filtered to obtain a nickel-containing solution, which can be further used for preparing a nickel-cobalt-manganese ternary positive electrode material; and the leaching residue can be returned to the leaching section for continued reaction, and since the content of impurities in the ferronickel alloy is relatively small, the recovery rates of Ni and Fe from the raw material can be more than 99%.
2. The present invention has simple operation, a short technological process, and low equipment requirements, and is suitable for industrialized production and application.

### BRIEF DESCRIPTION OF DRAWINGS

The present invention will be further illustrated below in conjunction with the accompanying drawings and embodiments, where:
Figure 1 is an SEM image of an iron phosphate product prepared in Embodiment 1 of the present invention at a magnification of 5000 folds;
Figure 2 is an SEM image of the iron phosphate product prepared in Embodiment 1 of the present invention at a magnification of 50000 folds;
Figure 3 is an XRD pattern of the iron phosphate product prepared in Embodiment 1 of the present invention; and
Figure 4 is a process flow diagram of Embodiment 1 of the present invention.

### DETAILED DESCRIPTION

The concept of the present invention and the technical effects produced thereby will be described below clearly and completely in conjunction with the embodiments, so as to fully understand the object, features and effects of the present invention. Obviously, the described embodiments are only some, rather than all, of the embodiments of the present invention. Based on the embodiments of the present invention, other embodiments obtained by those skilled having ordinary in the art without involving any inventive effort all fall within the scope of protection of the present invention.

### Embodiment 1

The method for recycling ferronickel alloy of this embodiment included the following steps:
(1) ball-milling, crushing and sieving 1-60 mm ferronickel alloy blocks (iron: 63.28%, nickel: 35.51%, Co: 0.34%, Mn: 0.09%, Si: 0.27%, Cr: 0.05%, Ca: 0.006%, Mg: 0.004%, Cu: 0.03%, S: 0.21%, and P: 0.03%) to obtain a ferronickel powder;
(2) mixing 100 g of the ferronickel powder with 1 L of sulfuric acid with a concentration of 1.5 mol/L, heating the mixture to 90°C for 4 h of reaction, and filtering the reaction product to obtain a leaching effluent containing nickel and iron and a leaching residue;
(3) adding sodium phosphate to the leaching effluent obtained in step (2) in an amount that was 0.9 times the theoretical amount, stirring the mixture for 1 h, then adding hydrogen peroxide in an amount that was 1.3 times the theoretical amount, stirring the mixture for 2 h, further adding 50 g of anhydrous iron phosphate, heating the mixture to 80°C for 6 h of reaction, and filtering the reaction product to obtain iron phosphate and a post-precipitation solution;
(4) subjecting the iron phosphate obtained in step (3) to pulping washing for 1 h, and filtering and then drying the iron phosphate to obtain an iron phosphate product; and
(5) adjusting the pH of the post-precipitation solution obtained in step (3) with a 25% sodium carbonate solution to about 4.5, with the adjustment time being 3 h, and filtering the solution to obtain a nickel sulfate solution.

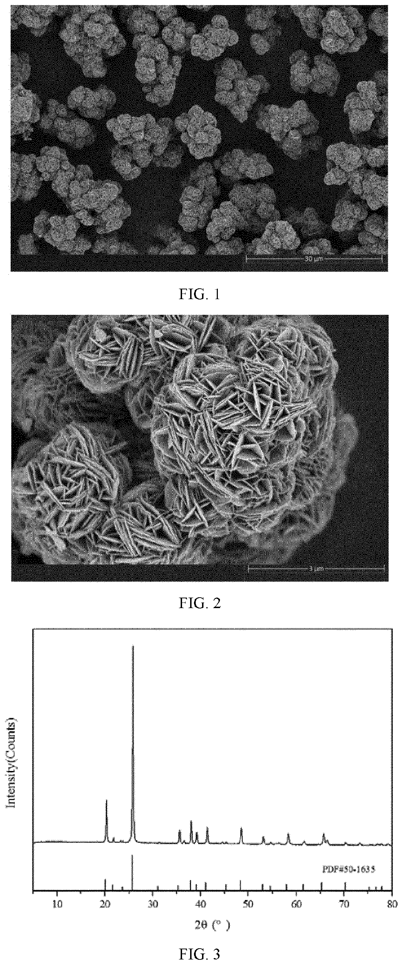

Figures 1 and 2 are SEM images of the iron phosphate product prepared in Embodiment 1. It can be seen from Figure 1 that the iron phosphate has a relatively uniform particle size distribution, and the iron phosphate is mainly pellets formed by the combination of flake-like primary sheets, with the particle size being about 10 µm.

Figure 3 is an XRD pattern of the iron phosphate product prepared in Embodiment 1 of the present invention. It can be seen from the diffraction pattern of Figure 2 that the iron phosphate prepared in Embodiment 1 of the present invention is fully consistent with the characteristic peaks on a standard card (PDF#50-1635), the peak shapes are sharp, and the characteristic peaks are obvious.

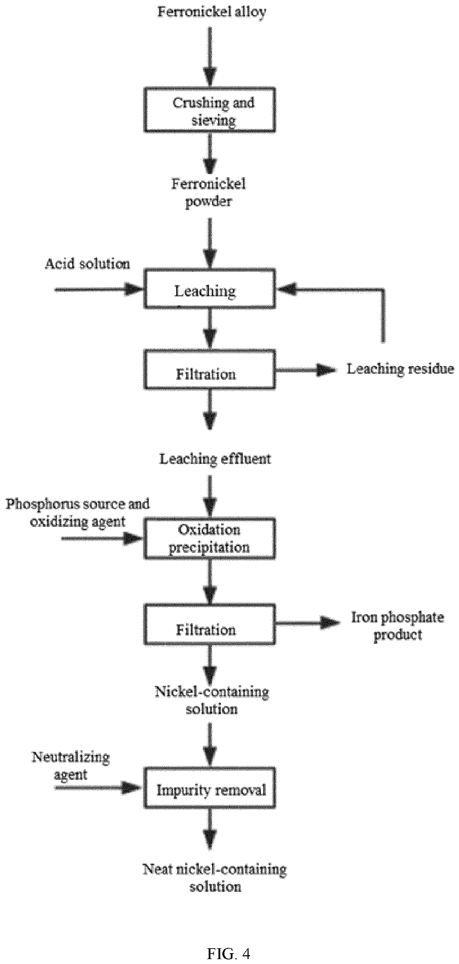

Figure 4 is a process flow diagram of Embodiment 1 of the present invention. As can be seen from Figure 4, the ferronickel alloy is ball-milled and crushed into a powder prior to being leached or ferronickel ingots are directly used for leaching, the leaching residue is returned for continued reaction, and a phosphorus source and an oxidizing agent are added to the leaching effluent and mixed; and a precipitant is added to the resulting mixed phosphorus iron solution, the solution is heated and stirred to obtain an iron phosphate product and a post-precipitation solution, and the post-precipitation solution is subjected to impurity removal to obtain a nickel-containing solution with a lower impurity content.

### Embodiment 2

The method for recycling ferronickel alloy of this embodiment included the following steps:
(1) mixing 200 g of ferronickel alloy blocks (iron: 63.28%, nickel: 35.51%, Co: 0.34%, Mn: 0.09%, Si: 0.27%, Cr: 0.05%, Ca: 0.006%, Mg: 0.004%, Cu: 0.03%, S: 0.21%, and P: 0.03%) with 1 L of sulfuric acid with a concentration of 1.5 mol/L, heating the mixture to 80°C for 12 h of reaction, and then filtering the reaction product to obtain a leaching effluent containing nickel and iron and incompletely reacted ferronickel alloy blocks;
(2) adding phosphoric acid to the leaching effluent obtained in step (2) in an amount that was 1.0 times the theoretical amount, stirring the leaching effluent for 0.5 h, then introducing oxygen, and performing a reaction for a time of 5 h;
(3) adding 100 g of iron phosphate dihydrate to the phosphorus iron solution obtained in step (3), heating the phosphorus iron solution to 90°C for 4 h of reaction, and filtering the reaction product to obtain iron phosphate and a post-precipitation solution;
(4) subjecting the iron phosphate obtained in step (4) to pulping washing for 2 h, and filtering and then drying the iron phosphate to obtain an iron phosphate product; and
(5) adjusting the pH of the post-precipitation solution obtained in step (4) with 30% ammonium carbonate to about 5, with the adjustment time being 4 h, and filtering the solution to obtain a nickel sulfate solution with a lower impurity content.

### Embodiment 3

The method for recycling ferronickel alloy of this embodiment included the following steps:
(1) ball-milling, crushing and sieving ferronickel alloy blocks (iron: 83.12%, nickel: 15.45%, Co: 0.51%, Mn: 0.05%, Si: 0.36%, Cr: 0.09%, Ca: 0.012%, Mg: 0.008%, Cu: 0.05%, S: 0.22%, and P: 0.01%) to obtain a ferronickel powder;
(2) mixing 200 g of the ferronickel powder with 0.8 L of nitric acid with a concentration of 2.5 mol/L, heating the mixture to 85°C for 5 h of reaction, and filtering the reaction product to obtain a leaching effluent containing nickel and iron and a leaching residue;
(3) adding ammonium phosphate to the leaching effluent obtained in step (2) in an amount that was 0.93 times the theoretical amount, and stirring the leaching effluent for 2 h;
(4) adding 20 g of aluminum oxide and iron phosphate dihydrate to the phosphorus iron solution obtained in step (3), heating the phosphorus iron solution to 70°C for 12 h of reaction, and filtering the reaction product to obtain iron phosphate and a post-precipitation solution;
(5) subjecting the iron phosphate obtained in step (4) to pulping washing for 0.5 h, and filtering and then drying the iron phosphate to obtain an iron phosphate product; and
(6) adjusting the pH of the post-precipitation solution obtained in step (4) with 5% sodium hydroxide to about 4, with the adjustment time being 5 h, and filtering the solution to obtain a nickel-containing solution with a lower impurity content.

### Embodiment 4

The method for recycling ferronickel alloy of this embodiment included the following steps:
(1) ball-milling, crushing and sieving ferronickel alloy blocks (iron 67.22%, nickel 30.79%, Co 0.47%, Mn 0.08%, Si 0.25%, Cr 0.09%, Ca 0.008%, Mg 0.005%, Cu 0.04%, S 0.29%, and P 0.05%) to obtain a ferronickel powder;
(2) mixing 50 g of the ferronickel powder with 0.75 L of hydrochloric acid with a concentration of 3.0 mol/L, heating the mixture to 80°C for 6 h of reaction, and filtering the reaction product to obtain a leaching effluent containing nickel and iron and a leaching residue;
(3) adding phosphoric acid to the leaching effluent obtained in step (2) in an amount that was 0.95 times, stirring the leaching effluent for 1.5 h, then adding hydrogen peroxide in an amount that was 1.5 times the theoretical amount, and stirring the mixture for 3 h;
(4) adding 10 g of titanium dioxide and anhydrous iron phosphate to the phosphorus iron solution obtained in step (3), heating the phosphorus iron solution to 75°C for 10 h of reaction, and filtering the reaction product to obtain iron phosphate and a post-precipitation solution;
(5) subjecting the iron phosphate obtained in step (4) to pulping washing for 2 h, and filtering and then drying the iron phosphate to obtain an iron phosphate product; and
(6) adjusting the pH of the post-precipitation solution obtained in step (4) with calcium phosphate to about 5.1, with the adjustment time being 6 h, and filtering the solution to obtain a nickel-containing solution with a lower impurity content.

### Comparative Example 1 (Embodiment 1 of CN 110872107 A)

A high-cobalt-level solution used in the embodiment was a white alloy leaching effluent, the main composition of which was as shown in Table 1:

**Table 1: Contents of main elements in white alloy leaching effluent (g/L)**

| Element | Co | Cu | Ni | Fe | Al | Mn | Ca | Mg | Zn |
|---|---|---|---|---|---|---|---|---|---|
| Content | 37.71 | 0.0067 | 0.016 | 112.3 | 0.55 | 0.35 | 0.72 | 0.76 | 0.65 |

The specific steps of recovering iron from the alloy leaching effluent of the cobalt-nickel industry were as follows:
1) First of all, the pH of the white alloy leaching effluent was adjusted with cobalt carbonate to 4-5 at room temperature, iron powder was then added, the mixture was stirred at room temperature for 0.5 h and then subjected to suction filtration, the pH of the filtrate was then adjusted to 2.8 to obtain a post-purification solution, and the post-purification solution was diluted to 72 g/L; and at the same time, 155 g/L diammonium hydrogen phosphate was prepared.
2) Tap water and a small amount of hydrogen peroxide was added to a reaction kettle as a basis, and during stirring, the diammonium hydrogen phosphate solution, the 2.5 mol ferrous post-purification solution, and hydrogen peroxide were added to the reaction kettle in parallel for synthesis, where the molar ratio of the charged iron to phosphorus during the process was maintained at 1, the charging temperature was 40-50°C, the charging time is 10 min, the stirring rotation speed was 240 rpm, and the pH value during the process was 2.3-2.6; and the post-synthesis material was maintained at the temperature in the reaction kettle for 60 min and then subjected to suction filtration to obtain a synthesized material and an iron-removed solution.
3) The post-synthesis material was washed by means of a combination of rinsing and slurry washing at a temperature of 40-70°C until the conductivity of the washing liquid was less than 5 ms/m. During the washing process, the liquid-to-solid ratio of a wet basis pulp was 6 : 1, and the stirring rotation speed was 300 rpm.
4) Phosphoric acid was added to the pulp obtained after synthesis and washing in an amount that was 0.5 times the amount of Fe by mole, and after the rotation speed was set to 260 rpm and the temperature was raised to 90°C, conversion was carried out, where he conversion time was 120 min.
5) The converted material was washed until the conductivity was less than 300 µm/cm, and then subjected to suction filtration, and after drying at 105°C, iron phosphate dihydrate was obtained; and the dry basis was further calcined at 520°C for 3 h to obtain anhydrous iron phosphate.

### Comparative Example 2 (Embodiment 1 of CN 106829907 A)

The method for preparing a nickel sulfate solution and battery-grade iron phosphate from nickel-containing pig iron of this comparative example included the following steps:
(1) a raw material pretreatment, where nickel-containing pig iron was dried and crushed into a powder, and the powder was sieved for composition detection;
(2) a leaching treatment, where the undersize material obtained in step (1) was subjected to atmospheric pressure leaching using a mixed acid and to solid-liquid separation to obtain a filtrate, where the leaching temperature was 50-90°C, and the leaching time was 3-8 hours;
(3) a precipitation treatment, where under the condition of using a precipitant to maintain the pH of the filtrate in step (2), an oxidizing agent was added simultaneously to oxidize divalent iron in the filtrate, a controlled crystallization method was used to prepare an iron phosphate precipitate, and after reaction, filtration and washing were performed to obtain a nickel-containing filtrate and an iron phosphate precipitate;
(4) an iron phosphate drying treatment, where the iron phosphate solid was vacuum dried at 90-120°C to obtain a battery-grade anhydrous iron phosphate product; and
(5) a nickel-containing filtrate extraction treatment, where the nickel-containing filtrate in step (3) was collected, a diluted extractant was used for nickel extraction, and the product was left to stand, followed by separation to obtain a nickel-containing extraction organic phase and an impurity-containing raffinate.

The iron phosphate products prepared in the above-mentioned Embodiments 1-3 and Comparative Examples 1 and 2 were tested for physical and chemical indexes, and the results were as shown in Table 2 below:

**Table 2: Physical and chemical index test results of anhydrous iron phosphate prepared in Embodiments 1-3**

| Item | Iron phosphate standards for lithium iron phosphate positive electrode material | Embodiment 1 | Embodiment 2 | Embodiment 3 | Comparative Example 1 | Comparative Example 2 |
|---|---|---|---|---|---|---|
| Fe (%) | 36.00-37.00 | 36.52 | 37.15 | 36.86 | 36.01 | 35.98 |
| P (%) | 20.50-21.00 | 20.74 | 20.98 | 20.65 | 20.8 | 20.24 |
| Fe/P | 0.960-1.0 | 0.976 | 0.982 | 0.989 | 0.961 | 0.986 |
| BET (specific surface area) (m²/g) | 3.00-12.00 | 8.91 | 6.56 | 7.32 | 9.23 | 6.73 |

From the results in Table 2, it can be seen that the physical and chemical indexes of the iron phosphate prepared after recycling the ferronickel alloy according to the present invention all met the standards for lithium iron phosphate positive electrode materials.

The iron phosphates prepared in the above-mentioned Embodiments 1-3 and Comparative Examples 1 and 2 were taken and prepared into lithium iron phosphates according to a conventional method, and the electrical properties of the prepared lithium iron phosphates were tested. The results were as shown in Table 3:

**Table 3: Comparison table of the test results of the compaction density and electrical properties of lithium iron phosphate powders synthesized from the iron phosphates of Embodiments 1-3 and Comparative Examples 1 and 2**

| No. | Powder compaction density (g/cc) | Charge/discharge specific capacity at 0.1 C (mAh/g) | Charge/discharge specific capacity at 0.1 C after 100 cycles (mAh/g) | Capacity retention ratio after 100 cycles (%) | First coulombic efficiency (%) |
|---|---|---|---|---|---|
| Embodiment 1 | 2.3458 | 162.3/155.7 | 151.1/150.2 | 96.47 | 95.93 |
| Embodiment 2 | 2.3379 | 162.9/156.4 | 152.4/151.7 | 96.99 | 96.00 |
| Embodiment 3 | 2.3802 | 161.9/156.9 | 150.8/149.8 | 95.47 | 96.91 |
| Comparative Example 1 | 2.3905 | 143.9/136.1 | 136.2/129.0 | 94.8 | 94.6 |
| Comparative Example 2 | 2.3910 | 142/135.2 | 135.5/128.5 | 95.0 | 95.2 |

It can be seen from Table 3 that the present invention has a first discharge specific capacity that can reach 161.9 mAh/g or more, and a capacity retention ratio after 100 cycles of greater than 95%, whereas the first discharge specific capacities of Comparative Examples 1 and 2 are lower and are less than 145 mAh/g.

**Table 4: Analysis of impurity elements in the nickel-containing solutions prepared in Embodiments 1-3 of the present invention (mg/L)**

| | **Ni** | **Fe** | **Co** | **Mn** | **Cu** | **Al** |
|---|---|---|---|---|---|---|
| Embodiment 1 | 30125.6 | 2.58 | 113.5 | 34.8 | 0.112 | 0.331 |
| Embodiment 2 | 45562.9 | 1.68 | 81.1 | 26.2 | 0.106 | 0.252 |
| Embodiment 3 | 47371.0 | 2.31 | 254.6 | 56.5 | 0.178 | 0.389 |

| | **Ca** | **Mg** | **P** | **Cr** | **Zn** | **Si** |
|---|---|---|---|---|---|---|
| Embodiment 1 | 12.5 | 1.07 | 1.55 | 0.134 | 1.047 | 55.9 |
| Embodiment 2 | 10.7 | 0.86 | 1.14 | 0.098 | 1.005 | 50.2 |
| Embodiment 3 | 18.3 | 1.12 | 2.27 | 0.102 | 1.062 | 61.3 |

In these embodiments, the concentrations of Co and Mn in the solutions are slightly higher, mainly due to the presence of Co and Mn in the raw material. During impurity removal, when adjusting the pH, the pH should not be too high so as to avoid precipitation of Ni; in addition, the precipitation of Co and Mn requires a higher pH value, and therefore, Co and Mn are present. In addition, the nickel-containing solutions of Embodiments 1-3 can be used for the preparation of a nickel-cobalt-manganese positive electrode material. Therefore, the presence of Co and Mn not only has no effect on the preparation of a nickel-cobalt-manganese positive electrode material, but can also reduce the addition of Co and Mn, thereby making full use of the nickel-containing solutions.

The embodiments of the present invention are described in detail above in conjunction with the accompanying drawings; however, the present invention is not limited to the above-mentioned embodiments. Within the scope of knowledge possessed by those of ordinary skill in the art, various changes can also be made without departing from the gist of the present invention. In addition, in the case of no conflict, the embodiments of the present invention and the features in the embodiments can be combined with each other.

## Claims

1. A method for recycling ferronickel alloy, comprising the following steps:
(1) ball-milling, crushing and sieving the ferronickel alloy to obtain a ferronickel alloy powder;
(2) leaching the ferronickel alloy powder with an acid solution, heating and stirring the solution, and filtering the solution to obtain a leaching effluent and a leaching residue;
(3) adding a phosphorus source to the leaching effluent, and mixing, stirring, heating and filtering the leaching effluent to obtain iron phosphate and a post-precipitation solution; and
(4) adding a neutralizing agent to the post-precipitation solution, and heating, stirring and filtering the solution to obtain a nickel-containing solution.

2. The method according to claim 1, wherein step (3) further comprises washing, filtering, and drying the iron phosphate to obtain an iron phosphate product.

3. The method according to claim 2, wherein the washing is pulping washing, the washing has a liquid-to-solid ratio of (1-20): 1 mL/g, and the washing time is 0.5-5 h.

4. The method according to claim 1, wherein in step (1), the ferronickel alloy is obtained by subjecting laterite nickel ore to reduction roasting, and the ferronickel alloy has a nickel content of 15-40% and an iron content of 60-85%.

5. The method according to claim 1, wherein in step (2), the acid solution is at least one of sulfuric acid, hydrochloric acid or nitric acid.

6. The method according to claim 1, wherein in step (3), the phosphorus source is at least one of phosphoric acid or a phosphate salt; and the phosphate salt includes, but is not limited to, at least one of trisodium phosphate, sodium dihydrogen phosphate, sodium monohydrogen phosphate, ammonium monohydrogen phosphate, ammonium dihydrogen phosphate or potassium phosphate.

7. The method according to claim 1, wherein in step (3), an oxidizing agent is further added to the leaching effluent; and the oxidizing agent is at least one of air, oxygen, hydrogen peroxide, ozone, sodium chlorate, or sodium persulfate.

8. The method according to claim 1, wherein in step (3), a phosphorus source is added to the leaching effluent for mixing and stirring, and a precipitant is then added, wherein the precipitant includes, but is not limited to, at least one of sodium hydroxide, sodium carbonate, titanium dioxide, aluminum hydroxide, aluminum oxide, anhydrous iron phosphate or iron phosphate dihydrate.

9. The method according to claim 1, wherein in step (4), the neutralizing agent is at least one of sodium carbonate, calcium carbonate, ammonium carbonate, potassium hydroxide, and sodium hydroxide.

10. An application of the method according to any one of claims 1-9 in the preparation of a positive electrode material precursor.
